# EUROPÄISCHE PATENTSCHRIFT

(11) **EP 0 367 721 B1**
(45) Veröffentlichungstag und Bekanntmachung des Hinweises auf die Patenterteilung: **25.08.1993**
(21) Anmeldenummer: 89810802.2
(22) Anmeldetag: 24.10.1989
(51) Int. Cl.: F16J 13/02, F16B 3/04

(54) **Verschliessbares Gefäss, insbesondere Druckgefäss**
Lockable container, especially a pressure vessel
Récipient obturable, surtout récipient sous pression

(30) Priorität: 01.11.1988 CH 4062/88
(43) Veröffentlichungstag der Anmeldung: 09.05.1990
(73) Patentinhaber: GEBRÜDER SULZER AKTIENGESELLSCHAFT, CH-8401 Winterthur (CH)
(72) Erfinder: Mutter, Heinz, CH-8400 Winterthur (CH)

(56) Entgegenhaltungen:
- EP-A- 0 300 222
- DE-A- 1 400 751
- GB-A- 2 123 517

## Beschreibung

Die Erfindung betrifft ein verschliessbares Gefäss, insbesondere Druckgefäss, mit einem ersten Gefässteil, der mindestens einen Endabschnitt mit einer im wesentlichen zylindrischen Aussenfläche und mindestens eine über diese in Umfangsrichtung verlaufende erste nutenartige Vertiefung aufweist, mindestens einem zweiten Gefässteil, der eine zur Aufnahme dieses Endabschnitts bestimmte Anschlusspartie mit einer im wesentlichen zylindrischen Innenfläche und mindestens eine über diese in Umfangsrichtung verlaufende zweite nutenartige Vertiefung sowie mindestens einen von aussen im wesentlichen tangential in die zweite Vertiefung führenden Verbindungskanal aufweist, und mit einem biegsamen stabförmigen Schliessteil mit rundem Querschnitt, wobei die Vertiefungen in einer vorbestimmten Verbindungsstellung der beiden Gefässteile einen Führungskanal zur Aufnahme des zum Verbinden der beiden Gefässteile durch den Verbindungskanal einführbaren, den ersten Gefässteil umgebenden Schliessteils begrenzen, und wobei mindestens eine der Vertiefungen mit einer Breite ausgeführt ist, welche um ein Spiel, das begrenzte axiale Relativbewegungen mindestens eines der durch den Schliessteil verbundenen Gefässteile zulässt, grösser ist als die Dicke des Schliessteils.

Bei einem aus der GB-A-2 123 517 bekannten Druckgefäss der genannten Art ist der Führungskanal durch zwei Nuten gebildet, welche je mit einem halbkreisförmigen Querschnitt ausgeführt sind, dessen Radius etwas grösser ist als der Radius des Querschnitts des Schliessteils. Entsprechend wirken die Gefässteile und der sie verbindende Schliessteil, insbesondere wenn dieser aus einem harten Material und mit formstabilem Querschnitt ausgeführt ist, jeweils mit Linienberührung zusammen, so dass bei einer gegenseitigen Verspannung der Gefässteile hohe Beanspruchungen durch Flächenpressung auftreten können, welche zu bleibenden Verformungen an den Gefässteilen und/oder am Schliessteil führen können. Bei der bekannten Ausführung ist ferner die Position des Schliessteils innerhalb des Führungskanals nicht eindeutig bestimmt, da der Schliessteil innerhalb der durch die Tiefen der beiden Nuten bestimmten Begrenzungen jeweils in unterschiedlichen Abständen vom Grund der betreffenden Nut zwischen den gegeneinander verspannbaren Gefässteilen eingeklemmt und somit z.B. abschnittsweise bezüglich seines Querschnitts aussermittig beansprucht und gegebenenfalls im Führungskanal blockiert werden kann.

Der Erfindung liegt die Aufgabe zugrunde, ein insbesondere in dieser Hinsicht verbessertes, einfach herstellbares Gefäss mit günstig beanspruchten Gefässteilen zu schaffen, welche mit wenigen Handgriffen miteinander verbunden und voneinander gelöst werden können.

Diese Aufgabe wird erfindungsgemäss durch die im kennzeichnenden Teil des Anspruchs 1 angegebenen Merkmale gelöst.

Im Anspruch 2 ist eine vorteilhafte Verwendung des Erfindungsgegenstandes hervorgehoben.

Weitere Merkmale ergeben sich aus der folgenden Beschreibung von in der Zeichnung schematisch dargestellten Ausführungsbeispielen nach der Erfindung. Es zeigt:
- Fig. 1: ein erfindungsgemäss ausgebildetes Gefäss in einem Längsschnitt;
- Fig. 2: das Gefäss in einer Draufsicht und einem Teilschnitt II-II aus der Fig. 1;
- Fig. 3: eine Einzelheit des Gefässes nach Fig. 1 in einer grösseren Darstellung;
- Fig. 4: eine entsprechende Draufsicht eines Gefässes in einer abgewandelten Ausführungsform;
- Fig. 5: ein weiteres erfindungsgemäss ausgebildetes Gefäss in einem Längsschnitt, in einer anderen Ausführungsform.

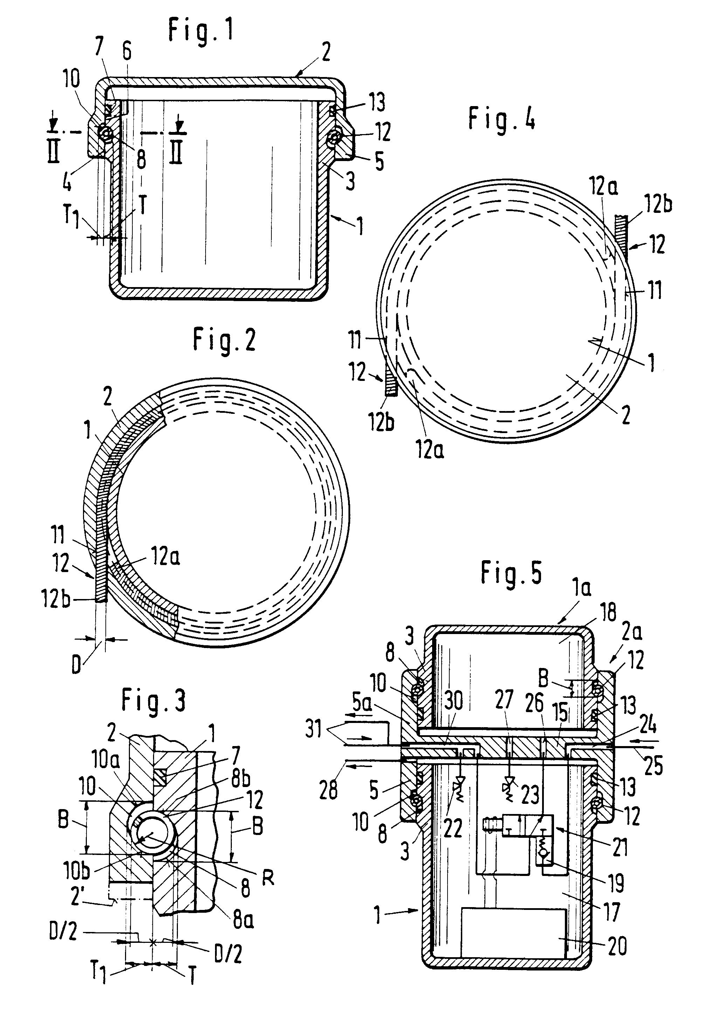

Das Gefäss nach Fig. 1 enthält einen zylindrischen ersten Gefässteil 1 und einen auf diesen aufsetzbaren zweiten Gefässteil 2. Der Gefässteil 1 ist mit einem in den Gefässteil 2 einführbaren Endabschnitt 3 ausgeführt, der eine zylindrische Aussenfläche 4 aufweist. Der Gefässteil 2 ist mit einem Anschlussteil 5 ausgeführt, der eine zylindrische Innenfläche 6 aufweist, deren Durchmesser um ein geringes Spiel grösser ist als der Durchmesser der Aussenfläche 4. In der Aussenfläche 4 sind zwei über deren Umfang verlaufende Vertiefungen in Form von Ringnuten 7 und 8 ausgebildet. Der Anschlussteil 5 ist mit einer in der Innenfläche 4 ausgebildeten Vertiefung in Form einer Ringnut 10 versehen, deren Querschnitt annähernd dem Querschnitt der Ringnut 8 entspricht. Im Anschlussteil 5 ist ferner ein tangential in die Ringnut 10 mündender Verbindungskanal 11 ausgebildet, dessen Querschnitt grösser ist als der Querschnitt der Ringnut 10. Die Ringnuten 8 und 10 sind so angeordnet, dass sie in der dargestellten Verbindungsstellung der Gehäuseteile 1 und 2 einen den Endabschnitt 3 umgebenden Führungskanal für einen durch den Verbindungskanal 11 in den Führungskanal einführbaren biegsamen, stabförmigen Schliessteil 12 begrenzen, dessen Länge gemäss Fig. 2 annähernd der Summe der abgewikkelten Länge des Führungskanals und der Länge des Verbindungskanals 11 entspricht. Die Ringnuten 8 und 10 sind je mit einer Tiefe T bzw. T₁ ausgeführt, die kleiner ist als die Dicke D des Schliessteils 12, welche annähernd der Summe der Tiefen T und T₁ entspricht. In der Ringnut 7 ist ein Dichtungsring 13 angeordnet, der den Spalt zwischen den Gefässteilen 1 und 2 abdichtet.

Zum Verbinden der beiden Gefässteile 1 und 2 wird der Schliessteil 12 durch den Verbindungskanal 11 in den Führungskanal eingeführt, bis sein inneres Ende 12a annähernd mit dem durch den Verbindungskanal 11 verlaufenden Abschnitt des Schliessteils 12 zusammentrifft, wodurch die beiden Gefässteile 1 und 2 gegeneinander fixiert werden. Zum Trennen der beiden Gefässteile 1 und 2 wird der Schliessteil 12 an dem aus dem Verbindungskanal 11 vorstehenden Ende 12b erfasst und aus dem Führungskanal herausgezogen, so dass der Gefässteil 2 vom Gefässteil 1 abgenommen werden kann.

Der Schliessteil 12 kann durch einen z.B. aus einem Kunststoff bestehenden Stab mit vollem Querschnitt oder, wie in Fig. 1 dargestellt, durch ein schlauchartiges Element mit ringförmigem Querschnitt gebildet sein. Entsprechend der Darstellung nach den Fig. 2 und 3 kann der Schliessteil 12 durch eine nach Art einer Schraubenfeder gewendelte Saite aus einem Stahldraht oder aus einem anderen geeigneten Material -- Metall oder Kunststoff -- gebildet sein. Bei Druckgefässen, insbesondere solchen, die für höhere Drucke ausgelegt sind, ist die Verwendung einer entsprechend bemessenen Stahlsaite als Schliessteil 12 von Vorteil. Bei einem für einen Druck von z.B. 10 bis 20 bar ausgelegten Druckgefäss mit einem Durchmesser von z.B. 200 mm kann durch eine als Schliesskörper 12 verwendete Stahlsaite von z.B. 4 bis 5 mm Durchmesser eine bleibende Verformung dieses Schliessteils 12 vermieden und damit jeweils ein sicheres Verbinden und Trennen der beiden Gehäuseteile 1 und 2 gewährleistet werden.

Wie insbesondere aus der Fig. 3 hervorgeht, sind die Ringnuten 8 und 10 je mit einer Breite B ausgeführt, die um ein Spiel, welches Relativbewegungen der durch den Schliessteil 12 verbundenen Gefässteile 1 und 2 zulässt, grösser ist als die Dicke D des Schliessteils 12. Die Tiefen T und T₁ der Ringnuten 8 und 10 sind je um ein entsprechendes Spiel, welches eine Freistellung des äusseren bzw. des inneren Umfangs des in den Führungskanal eingesetzten Schliessteils 12 zulässt, grösser als die halbe Dicke D/2 des Schliessteils 12. Die Ringnuten 8 und 10 können je mit über die Breite B abgestufter Tiefe oder, wie in Fig. 3 dargestellt, je mit über die Breite B kontinuierlich abnehmender Tiefe ausgeführt sein, wobei die grössten Tiefen T und T₁ je an der vom offenen Ende des betreffenden Gefässteils 1 bzw. 2 weiter abgelegenen inneren Randpartie 8a bzw. 10a der Ringnut 8 bzw. 10 ausgebildet sind, während die geringsten Tiefen je an der dem Ende des Gefässteils 1 bzw. 2 näher gelegenen äusseren Randpartie 8b bzw. 10b der Ringnut 8 bzw. 10 ausgebildet sind und je der halben Dicke D/2 des Schliessteils 12 entsprechen. Darstellungsgemäss sind diese äusseren Randpartien 8b und 10b je mit einem Radius R ausgeführt, welcher ebenfalls der halben Dicke D/2 des Schliessteils 12 entspricht. Dadurch ist der Gefässteil 2 zwischen der in Fig. 3 dargestellten Betriebsstellung, in welcher der Schliessteil 12 zwischen den äusseren Randpartien 8b und 10b der Ringnuten 8 und 10 gehalten ist, und einer strichpunktiert angedeuteten Montage- und Demontagestellung 2′ verstellbar, in welcher die mit den Tiefen T und T₁ ausgeführten inneren Randpartien 8a und 10a der Ringnuten 8 und 10 einander gegenüberliegen und den Schliessteil 12 mit einem allseitigen Spiel umgeben, welches relativ gross gewählt werden kann. In dieser Montage- und Demontagestellung 2′ kann somit der Schliessteil 12 leicht in den Führungskanal eingeführt und aus diesem herausgezogen werden. Unter der Wirkung eines im Gehäuse herrschenden Innendrucks wird der Gehäuseteil 2 aus der Stellung 2′ in die in Fig. 3 dargestellte Betriebsstellung angehoben und durch den zwischen den Randpartien 8b und 10b eingeklemmten Schliessteil 12 gehalten, wobei sich die Randpartien 8b und 10b je an einen relativ grossen Umfangsabschnitt des Schliessteils 12 eng anlegen. Entsprechend kann auch bei grossen Druckbelastungen eine günstige Beanspruchung der Gefässteile 1 und 2 und/oder des Schliessteils 12, insbesondere eine geringe Beanspruchung durch Flächenpressung, erzielt werden.

Es ist auch eine Ausführung möglich, bei der nur eine der Ringnuten 8 bzw. 10 mit den vorstehend beschriebenen grösseren Abmessungen ausgeführt ist, welche die gegenseitige Verstellung der Gefässteile 1 und 2 sowie die Freistellung des Schliessteils 12 zulassen.

Der durch eine Metallsaite - oder durch einen entsprechenden Schlauch - gebildete Schliessteil 12 kann auch mit einer zentralen Füllung, z.B. einem Strang aus Kunststoffasern, versehen sein. Nach einer anderen, nicht dargestellten Ausführungsform kann ein entsprechender Schliessteil auch durch ein Draht- oder Kunststoffseil gebildet sein. Es ist auch eine Ausführung möglich, bei der der Schliessteil durch ein z.B aus einem Kunststoff bestehendes Band gebildet ist.

Die Gehäuseteile 1 und 2 können auch mit zwei oder mehreren nebeneinander angeordneten Ringnuten 8 bzw. 10 zur Aufnahme von zwei oder mehren Schliessteilen 12 ausgeführt sein. Gemäss Fig. 4 kann der Anschlussteil 5 mit zwei in die Ringnut 10 tangential einmündenden Verbindungkanälen 11 versehen sein, durch welche zwei Schliessteile 12 in den Führungskanal eingeführt werden können, die sich je über den halben Umfang des Endabschnitts 3 erstrecken. Anstelle von Ringnuten 8 und 10 können auch entsprechende, nicht dargestellte, schraubenlinienartig verlaufende Nuten im Endabschnitt 3 bzw. in der Anschlusspartie 5 vorgesehen sein, die einen entsprechend längeren Schliessteil 12 aufnehmen können, welcher den Endabschnitt 3 mit einem Winkel von mehr als 360^{°} umschlingt.

Das in der Fig. 5 dargestellte Gefäss enthält zwei Gefässteile 1 und 1a sowie einen zwischen diesen angeordneten Gefässteil 2a, welcher eine Zwischenwand 15 und zwei mit den Endabschnitten 3 der Gefässteile 1 und 1a zusammenführbare Anschlussteile 5 bzw. 5a aufweist. Die Gefässteile 1 und 1a sind in beschriebener Weise je über einen Schliessteil 12 mit dem Gefässteil 2a lösbar verbunden.

Das Gefäss nach Fig. 5 ist als Gehäuse eines Sicherheitsaggregates einer nicht dargestellten Einrichtung zum Betanken eines Gasbrennstoffbehälters ausgeführt. Derartige Einrichtungen, welche nicht Gegenstand der vorliegenden Erfindung sind, sind in der EP-A-300 222 beschrieben. Entsprechend der Darstellung nach Fig. 5 ist das Gehäuse des Sicherheitsaggregates durch die Zwischenwand 15 in einen durch den Gefässteil 1 gebildeten Armaturenraum 17 und einen gegen diesen abgedichteten durch den Gefässteil 1a gebildeten Pufferraum 18 unterteilt. Im Armaturenraum 17 können die für die Steuerung der Betankungseinrichtung wesentlichen, vom Brennstoff durchströmten Armaturen mit den zugehörigen Verbindungs- und Schaltstellen sowie eine Steuereinrichtung 20 untergebracht sein. Von diesen Armaturen sind in der Fig. 5 ein mit einem Rückschlagventil 19 versehenes Umschaltventil 21, ein Druckbegrenzungsventil 22 und ein Sicherheitsventil 23 dargestellt.

Das Umschaltventil 21 ist mit einem Eingang über einen in der Zwischenwand 15 ausgebildeten Kanal 24 an eine Zuführleitung 25 für den Gasbrennstoff, und mit dem Ausgang über einen entsprechenden Kanal 26 an den Pufferraum 17 angeschlossen, welcher über einen Kanal 27 und das Sicherheitsventil 23 mit dem Armaturenraum 17, und auf nicht weiter dargestellte Weise mit der Saugseite eines Kompressors der Betankungseinrichtung in Verbindung steht. Der zweite Eingang des Umschaltventils 21 und das Druckbegrenzungsventil 22 sind über einen Kanal 30 an die mit dem zu betankenden Gasbrennstoffbehälter verbundene Speiseleitung 31 des Kompressors angeschlossen. Der Armaturenraum 17 ist ferner an eine aus dem Anordnungsbereich der Betankungseinrichtung wegführende Abströmleitung 28 angeschlossen.

Ueber die Steuereinrichtung 20 wird - z.B. beim Erreichen eines durch die Umgebungstemperatur vorbestimmten Speisedrucks des Kompressors - das Umschaltventil 21 jeweils in die dargestellte Schaltstellung verstellt, in der die Zufuhr des Gasbrennstoffs gesperrt wird und der komprimierte Gasbrennstoff aus der Speiseleitung 31 durch das Umschaltventil 21 in den Pufferraum 18 abströmt. Durch das Sicherheitsventil 23 wird der Druck im Pufferraum 18 auf einen vorbestimmten Wert, z.B. 2 bis 3 bar, begrenzt. Durch das Druckbegrenzungsventil 22 wird der Druck in der Speiseleitung 31 auf einen vorbestimmten Höchstwert von z.B. 100 bar begrenzt. Beim Uebersteigen dieser Drücke strömt der Gasbrennstoff durch das Sicherheitsventil 23 bzw. durch das Druckbegrenzungsventil 22 in den Armaturenraum 17 ab und wird durch die Abströmleitung 28 nach aussen abgeführt. In der anderen Schaltstellung des Umschaltventils 21 wird die Zufuhr des Gasbrennstoffs durch die Zuführleitung 25 in den Pufferraum 18 freigegeben und der mit der Speiseleitung 31 verbundene Eingang gesperrt, so dass sich in der Speiseleitung 31 der vorbestimmte Speisedruck aufbauen kann. Nähere Einzelheiten der Anordnung und Funktion der im druckfest verschliessbaren Gefässteil 1 untergebrachten Einbauteile sind in der vorstehend erwähnten EP-Schrift erläutert.

Durch die erfindungsgemässe Ausbildung des als Gehäuse des Sicherheitsaggregates verwendeten Gefässes sind die im druckfesten Armaturenraum 17 angeordneten Teile dieses Sicherheitsaggregates jederzeit mit wenigen Handgriffen - nach Entfernen des betreffenden Schliessteils 12 - für Inspektion und Wartung zugänglich. Einen entsprechend geringen Arbeitsaufwand erfordert der Zusammenbau der Gefässteile 1 bzw. 1a und 2a; das Sicherheitsaggregat ist nach dem Einführen der Schliessteile 12 betriebsbereit.

Die erfindungsgemässe Ausführung ist auch für die Ausbildung druckloser Behälter geeignet.

## Patentansprüche

1. Verschliessbares Gefäss, insbesondere Druckgefäss, mit einem ersten Gefässteil (1, 1a), der mindestens einen Endabschnitt (3) mit einer im wesentlichen zylindrischen Aussenfläche (4) und mindestens eine über diese in Umfangsrichtung verlaufende erste nutenartige Vertiefung (8) aufweist, mindestens einem zweiten Gefässteil (2, 2a), der eine zur Aufnahme dieses Endabschnitts (3) bestimmte Anschlusspartie (5) mit einer im wesentlichen zylindrischen Innenfläche (6) und mindestens eine über diese in Umfangsrichtung verlaufende zweite nutenartige Vertiefung (10) sowie mindestens einen von aussen im wesentlichen tangential in die zweite Vertiefung (10) führenden Verbindungskanal (11) aufweist, und mit einem biegsamen stabförmigen Schliessteil (12) mit rundem Querschnitt, wobei die Vertiefungen (8, 10) in einer vorbestimmten Verbindungsstellung der beiden Gefässteile (1, 2; 1, 1a, 2a) einen Führungskanal zur Aufnahme des zum Verbinden der beiden Gefässteile (1, 2; 1, 1a, 2a) durch den Verbindungskanal (11) einführbaren, den ersten Gefässteil (1, 1a) umgebenden Schliessteils (12) begrenzen, und wobei mindestens eine der Vertiefungen (8 bzw. 10) mit einer Breite (B) ausgeführt ist, welche um ein Spiel, das begrenzte axiale Relativbewegungen mindestens eines der durch den Schliessteil (12) verbundenen Gefässteile (1, 2; 1, 1a, 2a) zulässt, grösser ist als die Dicke (D) des Schliessteils (12), dadurch gekennzeichnet, dass mindestens eine der Vertiefungen (8 bzw. 10) in ihrer vom offenen Ende des betreffenden Gefässteils (1, 1a bzw. 2, 2a) weiter abgelegenen, inneren Randpartie (8a bzw. 10a) mit einer Tiefe (T bzw. T₁) ausgeführt ist, welche um ein Spiel, das eine Freistellung des schliessteils (12) innerhalb des Führungskanals zulässt, grösser ist als die halbe Dicke (D/2) des Schliessteils (12), und dass die beiden Vertiefungen (8 und 10) je in ihrer dem offenen Ende des betreffenden Gefässteils (1, 1a bzw. 2, 2a) näher gelegenen, äusseren Randpartie (8b bzw. 10b) mit einem Radius (R) ausgeführt sind, welcher der halben Dicke (D/2) des Schliessteils (12) entspricht.

2. Verwendung eines Gefässes nach Anspruch 1 als Gehäuse zur Aufnahme von insbesondere unter Druck stehenden Armaturen, z. B. Steuer- und/oder Schaltorganen (20, 21, 22, 23), einer Einrichtung zum Betanken eines Gasbrennstoffbehälters.

## Claims

1. A closable vessel, more particularly a pressure vessel, having a first vessel part (1, 1a) which has at least one end portion (3) with a substantially cylindrical outside surface (4) and at least one first groove-like recess (8) extending over the surface (4) in the peripheral direction, at least one second vessel part (2, 2a) having a connecting part (5) which is adapted to receive the end portion (3) and which has a substantially cylindrical inside surface (6) and at least one second groove-like recess (10) extending over the surface (6) in the peripheral direction and at least one connecting channel (11) extending from the exterior into the second recess (10) substantially tangentially, and having a flexible rod-like closure part (12) of round cross-section, the recesses (8, 10) when in a predetermined connecting position of the two vessel parts (1, 2; 1, 1a, 2a), defining a guide channel to receive the closure part (12) which is introducible through the connecting channel (11) to connect the two vessel parts (1, 2; 1, 1a, 2a) and which surrounds the first vessel part (1, 1a), and at least one of the recesses (8 and 10) has a width (B) which is greater, by a clearance permitting limited axial relative movement of at least one of the vessel parts (1, 2; 1, 1a, 2a) connected by the closure part (12), than the thickness (D) of the closure part (12), characterised in that at least one of the recesses (8 and 10), in its inner edge part (8a; 10a) farther away from the open end of the associated vessel part (1, 1a; 2, 2a), is made with a depth (T; T₁) which is greater, by a clearance permitting a release of the closure part (12) in the guide channel, than half the thickness (D/2) of the closure part (12), and in that the two recesses (8 and 10) are each made, in their outer edge part (8b; 10b) situated nearer the open end of the associated vessel part (1, 1a; 2, 2a), with a radius (R) corresponding to half the thickness (D/2) of the closure part (12).

2. Use of a vessel according to claim 1 as a casing to receive more particularly pressurised fittings, for example control and/or switching elements (20, 21, 22, 23) of a facility for filling a gas fuel tank.

## Revendications

1. Récipient obturable, en particulier récipient sous pression comprenant un premier élément (1, 1a) comportant au moins une partie extrême (3) ayant une surface extérieure sensiblement cylindrique (4) et au moins une première cavité (8) en forme de gorge, disposée sur cette surface et orientée dans la direction de la circonférence, ledit récipient comprenant au moins un second élément (2, 2a) comportant une partie de raccord (5) destinée à loger cette partie extrême (3) et ayant une surface intérieure sensiblement cylindrique (6) ainsi qu'au moins une seconde cavité en forme de gorge (10) réalisée sur cette surface intérieure et orientée dans la direction de la circonférence et au moins un canal de liaison (11) allant de l'extérieur sensiblement tangentiellement dans la seconde cavité (10), ledit récipient comprenant par ailleurs un élément de fermeture souple (12) en forme de tige de section circulaire et, lorsque les deux éléments du récipient (1, 2 ; 1, 1a ,2a) occupent une position d'assemblage prédéterminée, les cavités (8, 10) délimitent un canal de guidage destiné à loger l'élément de fermeture (12) qui entoure le premier élément (1, 1a) du récipient et qui s'introduit par le canal de liaison (11) pour relier les deux éléments (1, 2 ; 1, 1a, 2a) du récipient et au moins l'une des cavités (8 ainsi que 10) ayant une largeur (B) qui est supérieure à l'épaisseur (D) de l'élément de fermeture (12) d'une valeur qui correspond à un jeu qui autorise des mouvements relatifs axiaux limités d'au moins l'un des éléments (1, 2 ; 1, 1a, 2a) du récipient qui sont reliés par l'élément de fermeture (12), caractérisé en ce qu'au moins l'une des cavités (8 ainsi que 10) a sur sa partie de bord intérieur (8a ainsi que 10a) qui est la plus éloignée de l'extrémité ouverte de l'élément correspondant (1, 1a ou 2, 2a) du récipient une profondeur (T ou T1) qui est supérieure à la demi-épaisseur (D/2) de l'élément de fermeture (12) d'une valeur qui correspond à un jeu qui autorise une liberté de mouvement de l'élément de fermeture (12) à l'intérieur du canal de guidage, et en ce que les deux cavités (8 et 10) ont sur la partie de bord extérieur (8b ainsi que 10b) qui est la plus proche de l'extrémité ouverte de l'élément correspondant (1, 1a ainsi que 2, 2a) du récipient un rayon (R) qui correspond à la demi-épaisseur (D/2) de l'élément de fermeture (12).

2. Utilisation d'un récipient selon la revendication 1 en enveloppe de logement de robinetteries qui sont en particulier sous pression, par exemple d'organes de commande et/ou de distribution (20, 21, 22, 23) d'un dispositif de ravitaillement d'une cuve de combustible gazeux.
